(19) **Europäisches Patentamt European Patent Office Office européen des brevets**

(11) **EP 4 734 183 A1**

(12) **EUROPEAN PATENT APPLICATION**
published in accordance with Art. 153(4) EPC

(43) Date of publication:
**29.04.2026  Bulletin 2026/18**

(21) Application number: **24825595.2**

(22) Date of filing: **10.05.2024**

(51) International Patent Classification (IPC):
**H01M 4/525** (2010.01)        **H01M 4/36** (2006.01)
**H01M 10/052** (2010.01)      **H01M 10/0562** (2010.01)

(52) Cooperative Patent Classification (CPC):
**Y02E 60/10**

(86) International application number:
**PCT/JP2024/017535**

(87) International publication number:
**WO 2024/262186 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **22.06.2023   JP 2023102851**

(71) Applicant: **Panasonic Intellectual Property Management Co., Ltd.**
**Kadoma-shi, Osaka 571-0057 (JP)**

(72) Inventors:
• **NISHIO Yusuke**
  **Osaka 571-0057 (JP)**
• **MIYATAKE Kazufumi**
  **Osaka 571-0057 (JP)**

(74) Representative: **Eisenführ Speiser**
**Patentanwälte Rechtsanwälte PartGmbB**
**Postfach 10 60 78**
**28060 Bremen (DE)**

(54) **COATED ACTIVE MATERIAL, POSITIVE ELECTRODE MATERIAL, POSITIVE ELECTRODE, AND BATTERY**

(57)    A coated active material 100 according to the present disclosure includes: a positive electrode active material 101; and a coating layer 102 coating at least a portion of a surface of the positive electrode active material 101. The coating layer 102 includes a compound including Li, M, and F. In the compound, the M is at least one element selected from the group consisting of metalloid elements and metal elements other than Li. An amount of F in the compound per unit surface area of the positive electrode active material 101 is 10 mg/m$^2$ or more and 280 mg/m$^2$ or less.

FIG. 1

**Description**

TECHNICAL FIELD

The present disclosure relates to a coated active material, a positive electrode material, a positive electrode, and a battery.

BACKGROUND ART

Patent Literature 1 discloses a method for manufacturing a composite active material by coating a positive electrode active material with an oxide solid electrolyte and further coating the positive electrode active material with a sulfide solid electrolyte, and a battery using the composite active material.

CITATION LIST

Patent Literature

Patent Literature 1: JP 2016-18735 A

SUMMARY OF INVENTION

Technical Problem

The present disclosure provides a coated active material that can reduce the internal resistance of a battery.

Solution to Problem

The present disclosure provides a coated active material including:

a positive electrode active material; and
a coating layer coating at least a portion of a surface of the positive electrode active material, wherein
the coating layer includes a compound including Li, M, and F,
in the compound, the M is at least one element selected from the group consisting of metalloid elements and metal elements other than Li, and
an amount of F in the compound per unit surface area of the positive electrode active material is 10 mg/m$^2$ or more and 280 mg/m$^2$ or less.

Advantageous Effects of Invention

According to the present disclosure, it is possible to provide a coated active material that can reduce the internal resistance of a battery.

BRIEF DESCRIPTION OF DRAWINGS

FIG. 1 is a cross-sectional view schematically showing the configuration of a coated active material according to Embodiment 1.
FIG. 2 is a cross-sectional view schematically showing the configuration of a positive electrode material according to Embodiment 2.
FIG. 3 is a cross-sectional view schematically showing the configuration of a battery according to Embodiment 3.

DESCRIPTION OF EMBODIMENTS

(Findings Underlying the Present Disclosure)

The present inventors have conducted intensive studies on the internal resistance of lithium-ion batteries and factors that increase such resistance, and have found that products generated by an oxidation reaction of the electrolyte act as a resistive layer and the resistive layer increases the internal resistance of the battery. Furthermore, the present inventors have also discovered that fluorine compounds are effective in suppressing such an oxidation reaction of the electrolyte. However, fluorine compounds themselves generally exhibit high resistance. Accordingly, as a result of further intensive studies, the present inventors have found that coating the surface of the positive electrode active material with an appropriate amount of fluorine compound can reduce the resistance of the lithium-ion battery.

Based on these findings, the present inventors have conceived the technique of the present disclosure.

Embodiments of the present disclosure are described below with reference to the drawings.

(Embodiment 1)

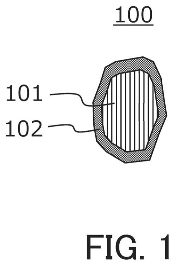

FIG. 1 is a cross-sectional view schematically showing the configuration of a coated active material according to Embodiment 1. A coated active material 100 includes a positive electrode active material 101 and a coating layer 102. The coating layer 102 includes a compound including Li, M, and F. In the compound, M is at least one element selected from the group consisting of metalloid elements and metal elements other than Li. The coating layer 102 coats at least a portion of the surface of the positive electrode active material 101. The coating layer 102 may coat the entire surface of the positive electrode active material 101 or may partially coat the surface of the positive electrode active material 101.

In the coated active material 100 according to Embodiment 1, the amount of F in the above compound per unit surface area of the positive electrode active material 101 is 10 mg/m$^2$ or more and 280 mg/m$^2$ or less.

The "metalloid elements" include B, Si, Ge, As, Sb, and Te.

The "metal elements" include all the elements in Groups 1 to 12 of the periodic table except hydrogen and all the elements in Groups 13 to 16 of the periodic table except B, Si, Ge, As, Sb, Te, C, N, P, O, S, and Se. That is, the metal elements are a group of elements that can become a cation when forming an inorganic compound with a halogen element.

The above compound including Li, M, and F is also hereinafter simply referred to as a "fluorine compound". Furthermore, the amount of F in the fluorine compound per unit surface area of the positive electrode active material 101 is also hereinafter simply referred to as the "amount of F".

The fluorine compound exhibits excellent oxidation resistance. Accordingly, by coating the positive electrode active material 101 with the fluorine compound, oxidation of the electrolyte contained in the positive electrode including the coated active material 100 can be suppressed. Therefore, the internal resistance of a battery that includes a positive electrode including the coated active material 100 can be reduced.

In the coated active material 100, owing to the amount of F being 10 mg/m$^2$ or more, the positive electrode active material 101 is coated with the fluorine compound having a sufficient thickness, and accordingly, the oxidation reaction of the electrolyte can be sufficiently suppressed. On the other hand, owing to the amount of F being 280 mg/m$^2$ or less, a positive electrode that includes the coated active material 100 can have sufficient electronic conductivity. Therefore, according to the coated active material 100 having an amount of F of 10 mg/m$^2$ or more and 280 mg/m$^2$ or less, the internal resistance of the battery can be reduced.

Furthermore, according to the coated active material 100 having an amount of F of 10 mg/m$^2$ or more and 280 mg/m$^2$ or less, the durability of the battery can also be enhanced.

Here, in the coated active material 100 according to Embodiment 1, the surface area of the positive electrode active material 101 is the specific surface area (m$^2$/g) calculated by the following mathematical equation (A) using the area-average diameter (diameter) determined from the particle size distribution of the positive electrode active material 101 obtained by image analysis.

$$\text{Specific surface area (m}^2\text{/g)}$$
$$= 6 \div (\text{area-average diameter (μm)} \times \text{density (g/cm}^3\text{))} \qquad \text{Mathematical Equation (A)}$$

The image of the positive electrode active material 101 used to determine the particle size distribution of the positive electrode active material 101 may be, for example, a dynamic image obtained by continuously photographing, with a CCD camera or the like, particles of the positive electrode active material 101 in a flowing state (in a wet or dry process), or an electron micrograph obtained by photographing, with an electron microscope, a cross section of the coated active material 100 or a cross section of the positive electrode including the coated active material 100. In measuring the particle size distribution of the positive electrode active material 101, at least 3,000 particles of the positive electrode active material 101 are used.

The particle size distribution and the area-average diameter of the positive electrode active material 101 obtained by image analysis can be measured, for example, using an image-based particle size distribution measurement apparatus.

An example of the measurement method is described. The positive electrode active material 101 is added to ethanol and dispersed with an ultrasonic homogenizer to prepare a measurement sample. The measurement sample is introduced into the apparatus, during which a dynamic image analysis type particle size analysis system (e.g., particle size analysis system XPT, manufactured by PS Prozesstechnik GmbH) is used to perform observation with a CCD camera. Thus, the particle size distribution and the area-average diameter can be measured.

The density of the positive electrode active material 101 is measured, for example, by a pycnometer method. A gas pycnometer, which measures by gas displacement, may be used.

The content of the element fluorine in the fluorine compound contained in the coating layer 102 is measured, for example, by combustion ion chromatography. Specifically, the coated active material 100 is combusted with the addition of a combustion aid (e.g., $WO_3$), the combustion gas is collected in an absorption liquid, and quantitative analysis is performed by ion chromatography. Thus, the content of the element fluorine is determined. For the coated active material 100 included in the positive electrode, the coated active material 100 is extracted from the positive electrode, and the extracted coated active material 100 is subjected to combustion ion chromatography. Thus, the content of the element fluorine is determined. The method for extracting the coated active material 100 from the positive electrode can be appropriately selected in consideration of, for example, the properties of the materials constituting the positive electrode. When it is difficult to extract the coated active material 100 from the positive electrode, the content of the element fluorine in the fluorine compound contained in the coating layer 102 may be determined using an elemental map of a cross section of the positive electrode obtained by energy dispersive X-ray spectroscopy in combination with a scanning transmission electron microscope (STEM-EDX).

The amount of F may be 19 $mg/m^2$ or more, 50 $mg/m^2$ or more, 54 $mg/m^2$ or more, 70 $mg/m^2$ or more, or 71 $mg/m^2$ or more. The amount of F may be 275 $mg/m^2$ or less, 240 $mg/m^2$ or less, 237 $mg/m^2$ or less, 150 $mg/m^2$ or less, or 143 $mg/m^2$ or less. The upper and lower limits of the amount of F may be defined by any combination selected from the above numerical values.

The amount of F may be 19 $mg/m^2$ or more and 275 $mg/m^2$ or less, 50 $mg/m^2$ or more and 240 $mg/m^2$ or less, 54 $mg/m^2$ or more and 237 $mg/m^2$ or less, 70 $mg/m^2$ or more and 150 $mg/m^2$ or less, or 71 $mg/m^2$ or more and 143 $mg/m^2$ or less. By setting the amount of F in the coated active material 100 within the above range, the internal resistance of the battery can be further reduced. Furthermore, by setting the amount of F in the coated active material 100 within the above range, both a reduction in the internal resistance of the battery and an enhancement in the durability of the battery can also be expected.

The coating layer 102 may include, as its main component, the fluorine compound including Li, M, and F, or may include only the fluorine compound. The "main component" means a component having the highest mass content. "Include only the fluorine compound" means that no materials other than the fluorine compound are intentionally added, except for unavoidable impurities. For example, raw materials of the fluorine compound and by-products generated during the preparation of the fluorine compound are included in unavoidable impurities. The ratio of the mass of unavoidable impurities to the total mass of the coating layer 102 may be 5% or less, 3% or less, 1% or less, or 0.5% or less.

In the fluorine compound contained in the coating layer 102, M may include at least one selected from the group consisting of Al, Ti, Zr, Si, Y, Ca, Mg, Nb, Ta, Mo, W, Ni, and Zn. When the fluorine compound includes any of these elements, the coated active material 100 can be expected to exhibit excellent effects in various aspects, for example, an enhancement in ionic conductivity and changes in mechanical properties.

The coating layer 102 may further include, in addition to the above fluorine compound, at least one selected from the group consisting of lithium niobate, lithium phosphate, lithium titanate, lithium tungstate, lithium fluorozirconate, lithium fluoroaluminate, lithium fluorotitanate, and lithium fluoromagnesate.

The molar ratio of F to the total amount of anions constituting the fluorine compound contained in the coating layer 102 may be 0.5 or more and 1.0 or less. According to this configuration, the oxidation resistance of the coated active material 100 can be enhanced. The fluorine compound may contain, for example, O (oxygen) as one of the anions constituting the fluorine compound.

The molar ratio of F to the total amount of anions constituting the fluorine compound may be 1.0. That is, the anions constituting the fluorine compound may be only F. According to this configuration, the oxidation resistance of the coated active material 100 can be further enhanced.

In the fluorine compound contained in the coating layer 102, the molar ratio of Li to the total amount of cations other than Li may be 2.3 or more and 6 or less. According to this configuration, the coated active material 100 can further reduce the internal resistance of the battery.

The fluorine compound contained in the coating layer 102 may be represented by the following composition formula (1):

$$Li_{6-\alpha y}(Me_{1-x}Al_x)_y F_6 \qquad \text{Composition Formula (1)}$$

in the composition formula (1),

Me is at least one element selected from the group consisting of metalloid elements and metal elements other than Li and Al,

$\alpha$ is the average valence of $(Me_{1-x}Al_x)$, and

$0 < x \leq 1$ and $0 < y \leq 1.5$ are satisfied.

The fluorine compound contained in the coating layer 102 may contain a crystalline phase represented by the above composition formula (1).

When the fluorine compound contained in the coating layer 102 is the compound represented by the above composition formula (1), the coated active material 100 can further reduce the internal resistance of the battery.

In the composition formula (1), Me may be at least one selected from the group consisting of Ti and Zr.

For example, when Me in the composition formula (1) is at least one selected from the group consisting of Ti and Zr, the fluorine compound contained in the coating layer 102 may include a compound represented by the following composition formula (2):

$$Li_{6-(4-x)}y(Me_{1-x}Al_x)_yF_6 \qquad \text{Composition Formula (2).}$$

The fluorine compound contained in the coating layer 102 may contain a crystalline phase represented by the above composition formula (2).

When the fluorine compound contained in the coating layer 102 includes the compound represented by the above composition formula (2), the coated active material 100 can further reduce the internal resistance of the battery and can further enhance the durability of the battery as well.

The positive electrode active material 101 includes a material having properties of occluding and releasing metal ions (e.g., lithium ions). The positive electrode active material 101 can be a lithium-containing transition metal oxide, a transition metal fluoride, a polyanion material, a fluorinated polyanion material, a transition metal sulfide, a transition metal oxysulfide, a transition metal oxynitride, or the like. In particular, when a lithium-containing transition metal oxide is used as the positive electrode active material 101, the battery can be manufactured at a reduced cost and can exhibit an increased average discharge voltage.

The positive electrode active material 101 may include a lithium nickel-containing oxide containing Li and Ni, and the lithium nickel-containing oxide has a layered rock salt structure. According to this configuration, the coated active material 100 can further reduce the internal resistance of the battery. In this case, in the positive electrode active material 101, the molar ratio of Ni to the total amount of cations other than Li may be 0.6 or more. According to this configuration, a high-capacity and low-resistance battery can be expected. Furthermore, since the lithium nickel-containing oxide, which contains Ni and has a layered rock salt structure, has a density that does not significantly change even when substitution with an alternative element is performed, a value of 4.7 may be used as a general value.

The positive electrode active material 101 may include, in addition to the lithium nickel-containing oxide described above, a material usable as an active material for a lithium-ion battery.

Examples of the material usable as an active material for a lithium-ion battery include $LiCoO_2$, $LiNi_xCo_{1-x}O_2$ ($0 < x < 0.5$), $LiNi_{1/3}CO_{1/3}Mn_{1/3}O_2$, $LiMnO_2$, a heteroelement-substituted Li-Mn spinel (e.g., $LiMn_{1.5}Ni_{0.5}O_4$, $LiMn_{1.5}Al_{0.5}O_4$, $LiMn_{1.5}Mg_{0.5}O_4$, $LiMn_{1.5}Co_{0.5}O_4$, $LiMn_{1.5}Fe_{0.5}O_4$, or $LiMn_{1.5}Zn_{0.5}O_4$), a lithium titanate (e.g., $Li_4Ti_5O_{12}$), a lithium metal phosphate (e.g., $LiFePO_4$, $LiMnPO_4$, $LiCoPO_4$, or $LiNiPO_4$), and a transition metal oxide (e.g., $V_2O_5$ or $MoO_3$).

Among the above materials, a lithium-containing composite oxide selected from $LiCoO_2$, $LiNixCo_{1-x}O_2$ ($0 < x < 0.5$), $LiNi_{1/3}CO_{1/3}Mn_{1/3}O_2$, $LiMnO_2$, a heteroelement-substituted Li-Mn spinel, a lithium metal phosphate, and the like is preferred.

The positive electrode active material 101 is in, for example, particulate form. The shape of the particles of the positive electrode active material 101 is not particularly limited. The shape of the particles of the positive electrode active material 101 can be spherical, ellipsoidal, flaky, or fibrous.

The positive electrode active material 101 may have a specific surface area of $0.05 \, m^2/g$ or more and $1.00 \, m^2/g$ or less or $0.15 \, m^2/g$ or more and $0.50 \, m^2/g$ or less. As described above, in the present specification, the specific surface area of the positive electrode active material 101 is the specific surface area calculated by the above mathematical equation (A) using the area-average diameter determined from the particle size distribution of the positive electrode active material 101 obtained by image analysis.

The fluorine compound contained in the coating layer 102 may be manufactured, for example, by the following method.

Raw material powders are prepared and mixed to obtain the target composition.

In one example where the target composition is $Li_3AlF_6$, LiF and $AlF_3$ are mixed in a molar ratio of approximately 3:1. The raw material powders may be mixed in a molar ratio adjusted in advance to offset a composition change that can occur during the synthesis process.

The raw material powders are reacted with each other mechanochemically (i.e., by mechanochemical milling) in a mixer, such as a planetary ball mill, to obtain a reaction product. The reaction product may be fired in a vacuum or in an inert atmosphere. Alternatively, the mixture of the raw material powders may be fired in a vacuum or in an inert atmosphere to obtain a reaction product. The firing is performed, for example, at 100°C or more and 400°C or less for 1 hour or more. To suppress a composition change during the firing, the raw material powders may be fired in a hermetically sealed container, such as a quartz tube.

The coated active material 100 can be manufactured by the following method.

A powder of the positive electrode active material 101 and powders of the materials of the coating layer 102 are mixed in an appropriate ratio to obtain a mixture. The mixture is subjected to a milling process to impart mechanical energy to the mixture. For the milling process, a mixer, such as a ball mill, can be used. To suppress oxidation of the materials, the milling process may be performed in a dry atmosphere and an inert atmosphere.

The coated active material 100 may be manufactured by a dry particle composing method. Processing by the dry particle composing method includes imparting mechanical energy generated by at least one selected from the group consisting of impact, compression, and shear to the positive electrode active material 101 and the materials of the coating layer 102. The positive electrode active material 101 and the materials of the coating layer 102 are mixed in an appropriate ratio.

The apparatus used in manufacturing the coated active material 100 is not particularly limited and can be an apparatus capable of imparting mechanical energy generated by impact, compression, and shear to the mixture of the positive electrode active material 101 and the materials of the coating layer 102. Examples of apparatuses capable of imparting such mechanical energy include ball mills and compression shear type processing apparatuses (particle composing machines), such as "MECHANO FUSION" (manufactured by Hosokawa Micron Corporation) and "NOBILTA" (manufactured by Hosokawa Micron Corporation).

"MECHANO FUSION" is a particle composing machine that employs a dry mechanical composing technique of imparting high mechanical energy to a plurality of different raw material powders. MECHANO FUSION imparts mechanical energy generated by compression, shear, and friction to raw material powders introduced between the rotating vessel and the press head. This produces composite particles.

"NOBILTA" is a particle composing machine that employs a dry mechanical composing technique developed from a particle composing technique in order to perform composing using nanoparticles as raw materials. NOBILTA produces composite particles by imparting mechanical energy generated by impact, compression, and shear to a plurality of raw material powders.

In "NOBILTA", inside the horizontal cylindrical mixing vessel, the rotor is disposed with a predetermined clearance from the inner wall of the mixing vessel, and the rotor rotates at a high speed to repeat processing of forcibly passing raw material powders through the clearance multiple times. This exerts the force of impact, compression, and shear on the mixture, and thus composite particles of the positive electrode active material 101 and the materials of the coating layer 102 can be produced. Such conditions as the rotational speed of the rotor, the processing time, and the charge amount can be adjusted to control, for example, the thickness of the coating layer 102 or the coverage of the positive electrode active material 101 with the materials of the coating layer 102.

However, the processing using any of the above apparatuses is not required. The coated active material 100 may be manufactured by mixing the positive electrode active material 101 and the materials of the coating layer 102 using, for example, a mortar or a mixer. The materials of the coating layer 102 may be deposited on the surface of the positive electrode active material 101 by various methods such as spraying, spray-dry coating, electrodeposition, immersion, and mechanical mixing with a disperser. A lithium nickel-containing oxide having a layered rock salt structure tends to react with water more readily as the Ni content increases. For example, reaction with water tends to form a reaction layer on the surface of an active material particle, and the reaction layer serves as a resistive layer during charging and discharging, leading to a deterioration in battery performance. Accordingly, when a lithium nickel-containing oxide having a high Ni content and a layered rock salt structure is used as a material of the coating layer 102, a coating method that does not use water is preferably used, although this is not an essential requirement.

(Embodiment 2)

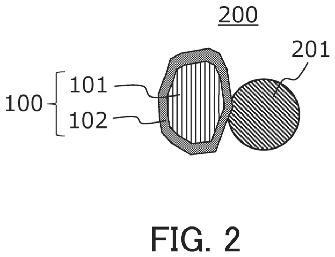

FIG. 2 is a cross-sectional view schematically showing the configuration of a positive electrode material according to Embodiment 2. A positive electrode material 200 includes a coated active material 100 and a first solid electrolyte 201. The coated active material 100 is the coated active material 100 described in Embodiment 1. As described in Embodiment 1, the coated active material 100 can reduce the internal resistance of the battery. Accordingly, the positive electrode material 200 can reduce the internal resistance of the battery.

In the positive electrode material 200, the first solid electrolyte 201 and the coated active material 100 may be in contact with each other. In this case, the coating layer 102 and the first solid electrolyte 201 are in contact with each other. The positive electrode material 200 may include a plurality of particles of the first solid electrolyte 201 and a plurality of particles of the coated active material 100.

The coated active material 100 may have a median diameter of 0.1 $\mu$m or more and 100 $\mu$m or less. When the coated active material 100 has a median diameter of 0.1 $\mu$m or more, the coated active material 100 and the first solid electrolyte 201 can form a favorable dispersion state in the positive electrode material 200. This enhances the charge and discharge characteristics of the battery. Furthermore, when the coated active material 100 has a median diameter of 100 $\mu$m or less, a sufficient diffusion rate of lithium within the coated active material 100 is ensured. This enables high-power operation of the battery 300.

The coated active material 100 may have a larger median diameter than the first solid electrolyte 201. In this case, the positive electrode active material 101 and the first solid electrolyte 201 can form a favorable dispersion state.

In the present disclosure, the "median diameter" means the particle diameter at a cumulative volume equal to 50% in the volumetric particle size distribution. The volumetric particle size distribution is measured, for example, using a laser diffractometer or an image analyzer.

The coated active material 100, the positive electrode active material 101, and the coating layer 102 are as described in Embodiment 1; accordingly, a detailed description thereof is omitted here. The first solid electrolyte 201, other materials included in the positive electrode material 200, and the manufacturing method for the positive electrode material 200 are described below.

The first solid electrolyte 201 may include at least one selected from the group consisting of a halide solid electrolyte, a sulfide solid electrolyte, an oxide solid electrolyte, a polymer solid electrolyte, and a complex hydride solid electrolyte.

The halide solid electrolyte may be a compound represented by the following composition formula (3):

$$\text{Li}_\alpha\text{M1}_\beta\text{X1}_\gamma \qquad \text{Composition Formula (3)}$$

where $\alpha$, $\beta$, and $\gamma$ are each a value greater than 0, M1 includes at least one element selected from the group consisting of metalloid elements and metal elements other than Li, and X1 is at least one element selected from the group consisting of F, Cl, Br, and I.

The first solid electrolyte 201 can be, for example, $\text{Li}_3\text{YX1}_6$, $\text{Li}_2\text{MgX1}_4$, $\text{Li}_2\text{FeX1}_4$, $\text{Li}(\text{Al,Ga,In})\text{X1}_4$, or $\text{Li}_3(\text{Al,Ga,1n})\text{X1}_6$.

In the present disclosure, "(A,B,C)" means "at least one selected from the group consisting of A, B, and C".

According to the above configuration, the resistance of the battery can be reduced. This enhances the charge and discharge characteristics of the battery.

In the composition formula (3), $2.5 \leq \alpha \leq 3$, $1 \leq \beta \leq 1.1$, and $\gamma = 6$ may be satisfied.

In the composition formula (3), X1 may include at least one selected from the group consisting of Cl and Br.

In the composition formula (3), M1 may include yttrium (Y).

A solid electrolyte containing Y may be, for example, a compound represented by the composition formula $\text{Li}_a\text{M1'}_b\text{Y}_c\text{X1}_6$, where $a + mb + 3c = 6$ and $c > 0$ are satisfied, M1' is at least one element selected from the group consisting of metalloid elements and metal elements other than Li and Y, and m represents the valence of M1'.

M1' may be at least one selected from the group consisting of Mg, Ca, Sr, Ba, Zn, Sc, Al, Ga, Bi, Zr, Hf, Ti, Sn, Ta, and Nb.

The solid electrolyte containing Y can be, specifically, $\text{Li}_3\text{YF}_6$, $\text{Li}_3\text{YCl}_6$, $\text{Li}_3\text{YBr}_6$, $\text{Li}_3\text{YI}_6$, $\text{Li}_3\text{YBrCl}_5$, $\text{Li}_3\text{YBr}_3\text{Cl}_3$, $\text{Li}_3\text{YBr}_5\text{Cl}$, $\text{Li}_3\text{YBr}_5\text{I}$, $\text{Li}_3\text{YBr}_3\text{I}_3$, $\text{Li}_3\text{YBrI}_5$, $\text{Li}_3\text{YCII}_5$, $\text{Li}_3\text{YCl}_3\text{I}_3$, $\text{Li}_3\text{YCl}_5\text{I}$, $\text{Li}_3\text{YBr}_2\text{Cl}_2\text{I}_2$, $\text{Li}_3\text{YBrCl}_4\text{I}$, $\text{Li}_{2.7}\text{Y}_{1.1}\text{Cl}_6$, $\text{Li}_{2.5}\text{Y}_{0.5}\text{Zr}_{0.5}\text{Cl}_6$, or $\text{Li}_{2.5}\text{Y}_{0.3}\text{Zr}_{0.7}\text{Cl}_6$.

The sulfide solid electrolyte can be, for example, $\text{Li}_2\text{S-P}_2\text{S}_5$, $\text{Li}_2\text{S-SiS}_2$, $\text{Li}_2\text{S-B}_2\text{S}_3$, $\text{Li}_2\text{S-GeS}_2$, $\text{Li}_{3.25}\text{Ge}_{0.25}\text{P}_{0.75}\text{S}_4$, or $\text{Li}_{10}\text{GeP}_2\text{S}_{12}$. To these, LiX, $\text{Li}_2\text{O}$, $\text{M'O}_q$, $\text{Li}_p\text{MO}_q$, or the like may be added, where X in "LiX" is at least one selected from the group consisting of F, Cl, Br, and I, the element M in "$\text{MO}_q$" and "$\text{Li}_p\text{MO}_q$" is at least one selected from the group consisting of P, Si, Ge, B, Al, Ga, In, Fe, and Zn, and p and q in "$\text{MO}_q$" and "$\text{Li}_p\text{MO}_q$" are each independently a natural number.

Oxide solid electrolytes are solid electrolytes containing oxygen. The oxide solid electrolyte may further contain an anion other than oxygen, except for sulfur and halogen elements.

The oxide solid electrolyte can be, for example, a NASICON-type solid electrolyte typified by $\text{LiTi}_2(\text{PO}_4)_3$ and element-substituted substances thereof, a $(\text{LaLi})\text{TiO}_3$-based perovskite-type solid electrolyte, a LISICON-type solid electrolyte typified by $\text{Li}_{14}\text{ZnGe}_4\text{O}_{16}$, $\text{Li}_4\text{SiO}_4$, and $\text{LiGeO}_4$ and element-substituted substances thereof, a garnet-type solid electrolyte typified by $\text{Li}_7\text{La}_3\text{Zr}_2\text{O}_{12}$ and element-substituted substances thereof, $\text{Li}_3\text{PO}_4$ and N-substituted substances thereof, or a glass or glass ceramic based on a material including a Li-B-O compound, such as $\text{LiBO}_2$ or $\text{Li}_3\text{BO}_3$, to which a material such as $\text{Li}_2\text{SO}_4$ or $\text{Li}_2\text{CO}_3$ is added.

The polymer solid electrolyte can be, for example, a compound of a polymer compound and a lithium salt. The polymer compound may have an ethylene oxide structure. The polymer compound having an ethylene oxide structure can contain a large amount of a lithium salt. Accordingly, the ionic conductivity can be further enhanced. Examples of the lithium salt include $\text{LiPF}_6$, $\text{LiBF}_4$, $\text{LiSbF}_6$, $\text{LiAsF}_6$, $\text{LiSO}_3\text{CF}_3$, $\text{LiN}(\text{SO}_2\text{F})_2$, $\text{LiN}(\text{SO}_2\text{CF}_3)_2$, $\text{LiN}(\text{SO}_2\text{C}_2\text{F}_5)_2$, $\text{LiN}(\text{SO}_2\text{CF}_3)$

$(SO_2C_4F_9)$, and $LiC(SO_2CF_3)_3$. One lithium salt selected from these may be used alone, or a mixture of two or more lithium salts selected from these may be used.

The complex hydride solid electrolyte can be, for example, $LiBH_4$-LiI or $LiBH_4$-$P_2S_5$.

The first solid electrolyte 201 may include, for example, Li and S. In other words, the first solid electrolyte 201 may include a sulfide solid electrolyte. Sulfide solid electrolytes exhibit high ionic conductivity and can enhance the charge and discharge efficiency of the battery. On the other hand, sulfide solid electrolytes exhibit poor oxidation resistance; however, an excellent effect is achieved by applying the technique of the present disclosure.

The first solid electrolyte 201 may contain unavoidable impurities, such as starting materials used in the synthesis of the solid electrolyte, by-products, and decomposition products. The same applies to the first solid electrolyte.

The shape of the first solid electrolyte 201 is not particularly limited and may be, for example, acicular, spherical, or ellipsoidal. For example, the first solid electrolyte 201 may be in particulate form.

When the first solid electrolyte 201 is in particulate form (e.g., spherical), the first solid electrolyte 201 may have a median diameter of, for example, 100 $\mu$m or less.

When the first solid electrolyte 201 has a median diameter of 100 $\mu$m or less, the coated active material 100 and the first solid electrolyte 201 can form a favorable dispersion state in the positive electrode material 200. This enhances the charge and discharge characteristics of the battery.

Furthermore, the first solid electrolyte 201 may have a median diameter of 10 $\mu$m or less.

According to the above configuration, the coated active material 100 and the first solid electrolyte 201 can form a favorable dispersion state in the positive electrode material 200.

In the positive electrode material 200 according to Embodiment 1, the content of the first solid electrolyte 201 and the content of the coated active material 100 may be equal to or different from each other.

The positive electrode material 200 may contain a binder for the purpose of enhancing the adhesion between particles. The binder is used to enhance the binding properties of the materials constituting the positive electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polycarbonate, polyethersulfone, polyetherketone, polyetheretherketone, polyphenylene sulfide, hexafluoropolypropylene, styrene-butadiene rubber, carboxymethyl cellulose, and ethyl cellulose. The binder can also be a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid ester, acrylic acid, and hexadiene. One selected from these may be used alone, or two or more selected from these may be used in combination.

The binder may be an elastomer for its excellent binding properties. An elastomer is a polymer with rubber elasticity. The elastomer used as the binder may be a thermoplastic elastomer or a thermosetting elastomer. The binder may contain a thermoplastic elastomer. Examples of thermoplastic elastomers include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadiene-styrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). One selected from these may be used alone, or two or more selected from these may be used in combination.

The positive electrode material 200 may further contain a conductive additive for the purpose of enhancing electronic conductivity. The conductive additive can be, for example, graphite, such as natural graphite or artificial graphite, carbon black, such as acetylene black or Ketjenblack, a conductive fiber, such as a carbon fiber or a metal fiber, fluorinated carbon, a metal powder, such as aluminum powder, a conductive whisker, such as a zinc oxide whisker or a potassium titanate whisker, a conductive metal oxide, such as titanium oxide, or a conductive polymer compound, such as polyaniline, polypyrrole, or polythiophene. When a conductive carbon additive is used, cost reduction can be achieved.

<Manufacturing Method for Positive Electrode Material>

The positive electrode material 200 is obtained by mixing the coated active material 100 and the first solid electrolyte 201. The method of mixing the coated active material 100 and the first solid electrolyte 201 is not particularly limited. An implement such as a mortar may be used to mix the coated active material 100 and the first solid electrolyte 201, or a mixer such as a ball mill may be used to mix the coated active material 100 and the first solid electrolyte 201. Furthermore, in preparing the positive electrode slurry, the mixing may be performed in a solvent using an apparatus capable of mixing such as a homogenizer.

(Embodiment 3)

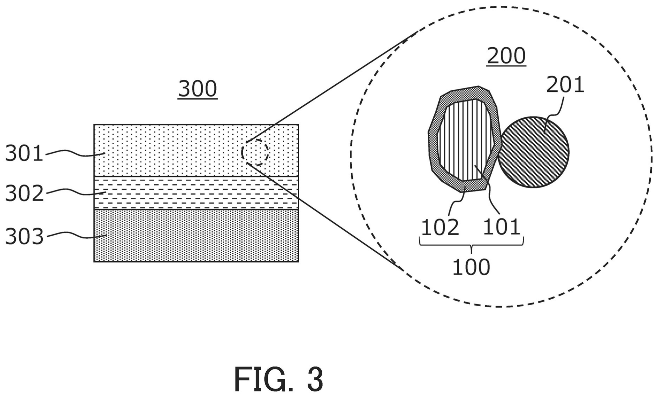

FIG. 3 is a cross-sectional view schematically showing the configuration of a battery according to Embodiment 3. A battery 300 includes a positive electrode 301, an electrolyte layer 302, and a negative electrode 303. The electrolyte layer 302 is disposed between the positive electrode 301 and the negative electrode 303. The positive electrode 301 includes the positive electrode material 200 described in Embodiment 2. According to this configuration, the internal resistance of the battery 300 can be reduced. The battery 300 according to Embodiment 3 may be, for example, a solid-state battery.

The volume ratio "v1:100 - v1" between the coated active material 100 and the first solid electrolyte 201 that are included in the positive electrode 301 may satisfy $30 \leq v1 \leq 95$. When $30 \leq v1$ is satisfied, a sufficient energy density of the battery 300 is ensured. Furthermore, when $v1 \leq 95$ is satisfied, high-power operation is possible.

The positive electrode 301 may have a thickness of 10 $\mu$m or more and 500 $\mu$m or less. When the positive electrode 301 has a thickness of 10 $\mu$m or more, a sufficient energy density of the battery 300 is ensured. When the positive electrode 301 has a thickness of 500 $\mu$m or less, high-power operation is possible.

The electrolyte layer 302 is a layer including an electrolyte material. This electrolyte material is, for example, a solid electrolyte. That is, the electrolyte layer 302 may be a solid electrolyte layer. The electrolyte layer 302 may include at least one solid electrolyte selected from the group consisting of a sulfide solid electrolyte, an oxide solid electrolyte, a halide solid electrolyte, a polymer solid electrolyte, and a complex hydride solid electrolyte. The details of each solid electrolyte are as described in Embodiment 2. The electrolyte layer 302 may include a solid electrolyte having the same composition as the composition of the first solid electrolyte 201 included in the positive electrode material 200. The electrolyte layer 302 may include a solid electrolyte having a composition different from the composition of the first solid electrolyte 201 included in the positive electrode material 200.

According to the above configuration, the resistance of the battery 300 can be further reduced.

The electrolyte layer 302 may include a solid electrolyte containing Li and S, that is, a sulfide solid electrolyte.

The electrolyte layer 302 may include only one solid electrolyte selected from the group consisting of the solid electrolytes described above, or may include two or more solid electrolytes selected from the group consisting of the solid electrolytes described above. The plurality of solid electrolytes have compositions different from each other. For example, the electrolyte layer 302 may include a halide solid electrolyte and a sulfide solid electrolyte.

The electrolyte layer 302 may have a thickness of 1 $\mu$m or more and 300 $\mu$m or less. When the electrolyte layer 302 has a thickness of 1 $\mu$m or more, the positive electrode 301 and the negative electrode 303 can be more reliably separated from each other. When the electrolyte layer 302 has a thickness of 300 $\mu$m or less, high-power operation of the battery 300 is possible.

The negative electrode 303 includes, as the negative electrode active material, a material having properties of occluding and releasing metal ions (e.g., lithium ions).

The negative electrode active material can be a metal material, a carbon material, an oxide, a nitride, a tin compound, a silicon compound, or the like. The metal material may be a simple substance of metal. Alternatively, the metal material may be an alloy. Examples of the metal material include lithium metal and a lithium alloy. Examples of the carbon material include natural graphite, coke, partially graphitized carbon, carbon fiber, spherical carbon, artificial graphite, and amorphous carbon. From the viewpoint of capacity density, silicon (Si), tin (Sn), a silicon compound, a tin compound, and the like can be suitably used.

The particles of the negative electrode active material may have a median diameter of 0.1 $\mu$m or more and 100 $\mu$m or less.

The negative electrode 303 may include other materials such as a solid electrolyte. The solid electrolyte can be any of the materials described in Embodiment 2.

According to the above configuration, the lithium-ion conductivity within the negative electrode 303 is enhanced, enabling high-power operation. The solid electrolyte may be any of the materials exemplified in Embodiment 2. That is, the negative electrode 303 may include a solid electrolyte having the same composition as the composition of the first solid electrolyte 201 included in the positive electrode material 200.

When the negative electrode active material has a median diameter of 0.1 $\mu$m or more, the negative electrode active material and the solid electrolyte can form a favorable dispersion state. This enhances the charge and discharge characteristics of the battery.

Furthermore, when the negative electrode active material has a median diameter of 100 $\mu$m or less, a sufficient diffusion rate of lithium within the negative electrode active material is ensured. This enables high-power operation of the battery.

The negative electrode active material may have a larger median diameter than the solid electrolyte. Accordingly, the negative electrode active material and the solid electrolyte can form a favorable dispersion state.

The volume ratio "v2:100 - v2" between the negative electrode active material and the solid electrolyte that are included in the negative electrode 303 may satisfy $30 \leq v2 \leq 95$. When $30 \leq v2$ is satisfied, a sufficient energy density of the battery 300 is ensured. Furthermore, when v2 ≤ 95 is satisfied, high-power operation is possible.

The negative electrode 303 may have a thickness of 10 μm or more and 500 μm or less. When the negative electrode 303 has a thickness of 10 μm or more, a sufficient energy density of the battery 300 is ensured. When the negative electrode 303 has a thickness of 500 μm or less, high-power operation is possible.

At least one selected from the group consisting of the electrolyte layer 302 and the negative electrode 303 may contain a binder for the purpose of enhancing the adhesion between particles. The binder usable in the electrolyte layer 302 and the negative electrode 303 can be any of the materials exemplified as the binder that can be contained in the positive electrode material 200 in Embodiment 2.

The negative electrode 303 may contain a conductive additive for the purpose of enhancing electronic conductivity. The conductive additive usable in the negative electrode 303 can be any of the materials exemplified as the conductive additive that can be contained in the positive electrode material 200 in Embodiment 2.

The battery according to Embodiment 3 can be configured as a battery in any of various forms such as a coin type, a cylindrical type, a prismatic type, a sheet type, a button type, a flat type, and a stacked type.

(Other Embodiments)

(Supplementary Description)

The above description of the embodiments discloses the following techniques.

(Technique 1)

A coated active material including:

a positive electrode active material; and
a coating layer coating at least a portion of a surface of the positive electrode active material, wherein
the coating layer includes a compound including Li, M, and F,
in the compound, the M is at least one element selected from the group consisting of metalloid elements and metal elements other than Li, and
an amount of F in the compound per unit surface area of the positive electrode active material is 10 mg/m$^2$ or more and 280 mg/m$^2$ or less.

According to this configuration, the internal resistance of the battery can be reduced.

(Technique 2)

The coated active material according to Technique 1, wherein
the M includes at least one selected from the group consisting of Al, Ti, Zr, Si, Y, Ca, Mg, Nb, Ta, Mo, W, Ni, and Zn.

According to this configuration, the coated active material according to Technique 2 can be expected to exhibit excellent effects in various aspects, for example, an enhancement in ionic conductivity and changes in mechanical properties.

(Technique 3)

The coated active material according to Technique 1 or 2, wherein
the amount of F in the compound per unit surface area of the positive electrode active material is 50 mg/m$^2$ or more and 240 mg/m$^2$ or less.

According to this configuration, both a reduction in the internal resistance of the battery and an enhancement in the durability of the battery can be expected.

(Technique 4)

The coated active material according to Technique 3, wherein
the amount of F in the compound per unit surface area of the positive electrode active material is 70 mg/m$^2$ or more and 150 mg/m$^2$ or less.

According to this configuration, both a reduction in the internal resistance of the battery and an enhancement in the durability of the battery can be expected.

(Technique 5)

The coated active material according to any one of Techniques 1 to 4, wherein
a molar ratio of F to a total amount of anions constituting the compound is 0.5 or more and 1.0 or less.
According to this configuration, the oxidation resistance of the coated active material can be enhanced.

(Technique 6)

The coated active material according to any one of Techniques 1 to 5, wherein
in the compound, a molar ratio of Li to a total amount of cations other than Li is 2.3 or more and 6 or less.
According to this configuration, the internal resistance of the battery can be further reduced.

(Technique 7)

The coated active material according to any one of Techniques 1 to 6, wherein
the compound is represented by the following composition formula (1):

$$Li_{6-\alpha y}(Me_{1-x}Al_x)_y F_6 \qquad \text{Composition Formula (1)}$$

in the composition formula (1),

the Me is at least one element selected from the group consisting of metalloid elements and metal elements other than Li and Al,
the $\alpha$ is an average valence of $(Me_{1-x}Al_x)$, and
$0 < x \leq 1$ and $0 < y \leq 1.5$ are satisfied.

According to this configuration, the internal resistance of the battery can be further reduced.

(Technique 8)

The coated active material according to Technique 7, wherein
in the composition formula (1), the Me is at least one selected from the group consisting of Ti and Zr.
According to this configuration, the internal resistance of the battery can be further reduced and the durability of the battery can be further enhanced as well.

(Technique 9)

The coated active material according to any one of Techniques 1 to 8, wherein
the positive electrode active material includes a lithium nickel-containing oxide including Li and Ni, the lithium nickel-containing oxide having a layered rock salt structure.
According to this configuration, the internal resistance of the battery can be further reduced.

(Technique 10)

The coated active material according to Technique 9, wherein
in the positive electrode active material, a molar ratio of Ni to a total amount of cations other than Li is 0.6 or more.
According to this configuration, the internal resistance of the battery can be further reduced.

(Technique 11)

A positive electrode material including the coated active material according to any one of Techniques 1 to 10.
According to this configuration, the internal resistance of the battery can be reduced.

(Technique 12)

A positive electrode including the positive electrode material according to Technique 11.
According to this configuration, the internal resistance of the battery can be reduced.

(Technique 13)

A battery including the positive electrode according to Technique 12.

According to this configuration, the internal resistance of the battery can be reduced.

(Technique 14)

The battery according to Technique 13, wherein
the battery is a solid-state battery.

According to this configuration, a solid-state battery having reduced internal resistance of the battery can be achieved.

(Technique 15)

The battery according to Technique 14, including a solid electrolyte including Li and S.

According to this configuration, a solid-state battery having further reduced internal resistance of the battery can be achieved.

EXAMPLES

The details of the present disclosure are described below using examples and a comparative example. The electrode and the battery of the present disclosure are not limited to the following examples.

<Example 1>

[Preparation of Fluorine Compound Contained in Coating Layer]

The target composition of the fluorine compound was set as $Li_3AlF_6$ (hereinafter referred to as LAF). In an argon atmosphere having a dew point of -60°C or less (hereinafter referred to as "dry argon atmosphere"), LiF and $AlF_3$ were prepared as raw material powders in a molar ratio of $LiF:AlF_3$ = 3:1. These raw material powders were introduced into a 45 cc jar for a planetary ball mill together with $\varphi$1 mm balls (25 g). $\gamma$-Butyrolactone (GBL) was added dropwise as an organic solvent into the jar so that the solids content became 30%. Here, the solids content is calculated by {(mass of raw materials introduced)/(mass of raw materials introduced + mass of solvent introduced)} $\times$ 100. A milling process was performed using a planetary ball mill at 500 rpm for 12 hours. After the milling process, the balls were removed to obtain a slurry. The slurry obtained was dried in a nitrogen flow at 270°C for 1 hour using a heating mantle. The resulting solid was pulverized in a mortar to obtain a powder of the LAF, which was the fluorine compound according to Example 1.

[Preparation of Coated Active Material]

As the positive electrode active material, a powder of $Li(NiCoAl)O_2$ (hereinafter referred to as "NCA") was prepared. The NCA was added to ethanol and dispersed using an ultrasonic homogenizer to prepare a measurement sample. The area-average diameter of the NCA was measured from the image-based particle size distribution obtained using a dynamic image analysis type particle size analysis system (e.g., particle size analysis system XPT, manufactured by PS Prozesstechnik GmbH), which was used as an image-based particle size distribution measurement apparatus. The area-average diameter of the NCA was 5.37 $\mu$m. This positive electrode active material is hereinafter referred to as NCA5.37. The true density of $Li(NiCoAl)O_2$ is 4.7 g/cc. Accordingly, the specific surface area of the NCA5.37, calculated by the above mathematical equation (A), was 0.238 $m^2/g$ (= 1.12 $m^2/cc$).

A coating layer composed of the LAF was formed on the surface of the NCA5.37. The coating layer was formed by a compression shear process using a particle composing machine (NOB-MINI, manufactured by Hosokawa Micron Corporation). Specifically, the NCA5.37 and the LAF were weighed in a volume ratio of 98.9:1.1 and processed under the following conditions: blade clearance of 2 mm, rotational speed of 8,000 rpm, and processing time of 30 min. Thus, the coated active material of Example 1 was obtained.

The content of the element fluorine in the prepared coated active material was measured by combustion ion chromatography. The content of the element fluorine was 0.45 mass%. Based on the specific surface area of the positive electrode active material being 0.238 $m^2/g$, the amount of F was 19 $mg/m^2$.

[Preparation of First Solid Electrolyte]

In an argon glove box having a dew point of -60°C or less, $Li_2S$ and $P_2S_5$ as the raw material powders were weighed in a molar ratio of $Li_2S:P_2S_5 = 75:25$. These were pulverized and mixed in a mortar to obtain a mixture. The mixture was then subjected to a milling process using a planetary ball mill (Model P-7, manufactured by Fritsch GmbH) for 10 hours at 510 rpm. Thus, a glassy solid electrolyte was obtained. The glassy solid electrolyte was heat-treated in an inert atmosphere at 270°C for 2 hours. Thus, a glass-ceramic sulfide solid electrolyte $Li_2S$-$P_2S_5$ (hereinafter referred to as "LPS") was obtained as the first solid electrolyte.

[Preparation of Positive Electrode]

In an argon glove box, the coated active material of Example 1 and the LPS were weighed so that the volume ratio of the NCA5.37 to the first solid electrolyte was 6:4, and then mixed. Furthermore, a binder, a solvent, and a conductive additive were added to the mixture, and the resulting mixture was dispersed using a homogenizer to prepare a positive electrode slurry. The prepared slurry was applied onto a current collector and dried on a hot plate to prepare a positive electrode.

[Fabrication of Battery]

As the negative electrode active material, $Li_4Ti_5O_{12}$ (hereinafter referred to as LTO) was used. In an argon glove box having a dew point of -60°C or less, a binder, a solvent, a conductive additive, and LPS were mixed and dispersed using a homogenizer. Thus, a mixture of the binder, the solvent, the conductive additive, and the LPS was obtained. The LTO was added to and mixed with the mixture, and the resulting mixture was dispersed using a homogenizer to prepare a negative electrode material slurry. The prepared slurry was applied onto a current collector and dried on a hot plate to prepare a negative electrode. The mixing ratio of the LTO to the LPS was 65:35 by volume.

LPS, a binder, and a solvent were mixed and dispersed using a homogenizer. Thus, a slurry including the LPS was prepared. The prepared slurry was applied onto a substrate and dried on a hot plate to prepare an electrolyte layer.

The prepared negative electrode and electrolyte layer were stacked, and the stack was pressure-formed while being heated. Thereafter, the substrate was removed from the electrolyte layer. Next, the positive electrode was stacked on the side of the stack opposite to the negative electrode so that the positive electrode was in contact with the electrolyte layer, and the stack was pressure-formed while being heated. Current collector leads were attached to the resulting formed body, the formed body was then placed in a laminate package, and the package was sealed. Thus, a battery was fabricated.

[Evaluation of Battery Performance]

The battery was placed in a thermostatic chamber set at 25°C.

(i) A constant-current charge was performed at a current value of 0.4 mA equivalent to a 0.3C rate (3.3-hour rate) relative to the theoretical capacity of the battery until the voltage reached 2.7 V. This was followed by a constant-voltage charge at a voltage of 2.7 V until the current value reached 0.013 mA equivalent to a 0.01C rate, at which point charging was terminated. Subsequently, in the same manner, a constant-current discharge was performed at a 0.3C rate (10-hour rate) until the voltage reached 1.5 V.

(ii) Thereafter, a constant-current charge was again performed at a 0.3 C rate (3.3-hour rate) until the voltage reached 2.7 V, followed by a constant-voltage charge until the current value reached an equivalent of a 0.01 C rate. Subsequently, a constant-current discharge was performed at a 0.3 C rate until the voltage reached 2.25 V, corresponding to a state of charge (SOC) of 50%. This was followed by a constant-voltage discharge at a voltage of 2.25 V until the current reached an equivalent of a 0.01 C rate, at which point discharging was terminated.

(iii) After a rest period, a constant-current discharge was performed at a 10C rate (0.1-hour rate) for 1 second, and the voltage after 0.1 second was measured.

The direct current resistance of the battery calculated by the following mathematical equation (B) is referred to as DCR:

$$DCR = (Vo - V) \times S/I \qquad (B)$$

in the above mathematical equation (B), Vo is the voltage before the 1-second discharge, V is the voltage after the 0.1-second discharge, S is the contact area between the positive electrode and the electrolyte layer, and I is the current equivalent to a 10C rate.

The DCR of the battery of Example 1 was 15.5 $\Omega\cdot cm^2$.

<<Examples 2 to 8>>

The same procedures as in Example 1 are omitted.

[Preparation of Coated Active Material]

<Example 2>

NCA5.37 and LAF were weighed in a volume ratio of 96.9:3.1. Using a particle composing machine (NOB-MINI, manufactured by Hosokawa Micron Corporation) as in Example 1, a coating layer composed of the LAF was formed on the surface of the NCA5.37 in the same manner as in Example 1. Thus, the coated active material of Example 2 was obtained. The content of the element fluorine in the prepared coated active material was measured by combustion ion chromatography. The content of the element fluorine was 1.26 mass%. In the prepared coated active material, the amount of F was 54 mg/m$^2$.

<Example 3>

NCA5.37 and LAF were weighed in a volume ratio of 96.4:3.6. Using a particle composing machine (NOB-MINI, manufactured by Hosokawa Micron Corporation) as in Example 1, a coating layer composed of the LAF was formed on the surface of the NCA5.37 in the same manner as in Example 1. Thus, the coated active material of Example 3 was obtained. The content of the element fluorine in the prepared coated active material was measured by combustion ion chromatography. The content of the element fluorine was 1.46 mass%. In the prepared coated active material, the amount of F was 63 mg/m$^2$.

<Example 4>

NCA5.37 and LAF were weighed in a volume ratio of 95.9:4.1. Using a particle composing machine (NOB-MINI, manufactured by Hosokawa Micron Corporation) as in Example 1, a coating layer composed of the LAF was formed on the surface of the NCA5.37 in the same manner as in Example 1. Thus, the coated active material of Example 4 was obtained. The content of the element fluorine in the prepared coated active material was measured by combustion ion chromatography. The content of the element fluorine was 1.67 mass%. In the prepared coated active material, the amount of F was 71 mg/m$^2$.

<Example 5>

NCA5.37 and LAF were weighed in a volume ratio of 95.4:4.6. Using a particle composing machine (NOB-MINI, manufactured by Hosokawa Micron Corporation) as in Example 1, a coating layer composed of the LAF was formed on the surface of the NCA5.37 in the same manner as in Example 1. Thus, the coated active material of Example 5 was obtained. The content of the element fluorine in the prepared coated active material was measured by combustion ion chromatography. The content of the element fluorine was 1.87 mass%. In the prepared coated active material, the amount of F was 80 mg/m$^2$.

<Example 6>

NCA5.37 and LAF were weighed in a volume ratio of 94.4:5.6. Using a particle composing machine (NOB-MINI, manufactured by Hosokawa Micron Corporation) as in Example 1, a coating layer composed of the LAF was formed on the surface of the NCA5.37 in the same manner as in Example 1. Thus, the coated active material of Example 6 was obtained. The content of the element fluorine in the prepared coated active material was measured by combustion ion chromatography. The content of the element fluorine was 2.28 mass%. In the prepared coated active material, the amount of F was 98 mg/m$^2$.

<Example 7>

NCA5.37 and LAF were weighed in a volume ratio of 91.9:8.1. Using a particle composing machine (NOB-MINI, manufactured by Hosokawa Micron Corporation) as in Example 1, a coating layer composed of the LAF was formed on the surface of the NCA5.37 in the same manner as in Example 1. Thus, the coated active material of Example 7 was obtained. The content of the element fluorine in the prepared coated active material was measured by combustion ion chromatography. The content of the element fluorine was 3.29 mass%. In the prepared coated active material, the amount of F was 143 mg/m$^2$.

<Example 8>

NCA5.37 and LAF were weighed in a volume ratio of 84.9:15.1. Using a particle composing machine (NOB-MINI, manufactured by Hosokawa Micron Corporation) as in Example 1, a coating layer composed of the LAF was formed on the surface of the NCA5.37 in the same manner as in Example 1. Thus, the coated active material of Example 8 was obtained. The content of the element fluorine in the prepared coated active material was measured by combustion ion chromatography. The content of the element fluorine was 6.14 mass%. In the prepared coated active material, the amount of F was 275 mg/m$^2$.

<<Examples 9 to 18>>

The same procedures as in Example 1 are omitted.

<Example 9>

[Preparation of Fluorine Compound Contained in Coating Layer]

The target composition of the fluorine compound was set as $Li_{2.7}Ti_{0.3}Al_{0.7}F_6$ (hereinafter referred to as LTAF). In a dry argon atmosphere, LiF, TiF$_4$, and AlF$_3$ were prepared as raw material powders in a molar ratio of LiF:TiF$_4$:AlF$_3$ = 2.7:0.3:0.7. These raw material powders were introduced into a 45 cc jar for a planetary ball mill together with $\varphi$1 mm balls (25 g). $\gamma$-Butyrolactone (GBL) was added dropwise as an organic solvent into the jar so that the solids content became 30%. Here, the solids content is calculated by {(mass of raw materials introduced)/(mass of raw materials introduced + mass of solvent introduced)} $\times$ 100. A milling process was performed using a planetary ball mill at 500 rpm for 12 hours. After the milling process, the balls were removed to obtain a slurry. The slurry obtained was dried in a nitrogen flow at 270°C for 1 hour using a heating mantle. The resulting solid was pulverized in a mortar to obtain a powder of the LTAF, which was the fluorine compound according to Example 9.

[Preparation of Coated Active Material]

As the positive electrode active material, a powder of Li(NiCoAl)O$_2$ (NCA) was prepared. The NCA was added to ethanol and dispersed using an ultrasonic homogenizer to prepare a measurement sample. The area-average diameter of the NCA was measured from the image-based particle size distribution determined using the same type of apparatus as in Example 1. The area-average diameter of the NCA was 6.38 $\mu$m. This positive electrode active material is hereinafter referred to as NCA6.38. The true density of Li(NiCoAl)O$_2$ is 4.7 g/cc. Accordingly, the specific surface area of the NCA6.38, calculated by the above mathematical equation (A), was 0.200 m$^2$/g (= 0.94 m$^2$/cc).
A coating layer composed of the LTAF was formed on the surface of the NCA6.38. The coating layer was formed by a compression shear process using a particle composing machine (NOB-MINI, manufactured by Hosokawa Micron Corporation). Specifically, the NCA6.38 and the LTAF were weighed in a volume ratio of 95.4:4.6 and processed under the following conditions: blade clearance of 2 mm, rotational speed of 8,000 rpm, and processing time of 30 min. Thus, the coated active material of Example 9 was obtained.
The content of the element fluorine in the prepared coated active material was measured by combustion ion chromatography. The content of the element fluorine was 1.79 mass%. Based on the specific surface area of the positive electrode active material being 0.200 m$^2$/g, the amount of F was 91 mg/m$^2$.

<Example 10>

[Preparation of Coated Active Material]

NCA5.37 and LTAF were weighed in a volume ratio of 95.4:4.6. Using a particle composing machine as in Example 9, a coating layer composed of the LTAF was formed on the surface of the NCA5.37. Thus, the coated active material of Example 10 was obtained. In the prepared coated active material, the amount of F was 77 mg/m$^2$.

<Example 11>

[Preparation of Coated Active Material]

As the positive electrode active material, a powder of Li(NiCoAl)$O_2$ (NCA) was prepared. The NCA was added to ethanol and dispersed using an ultrasonic homogenizer to prepare a measurement sample. The area-average diameter of the NCA was measured from the image-based particle size distribution determined using the same type of apparatus as in Example 1. The area-average diameter of the NCA was 4.09 $\mu$m. This positive electrode active material is hereinafter referred to as NCA4.09. The true density of Li(NiCoAl)$O_2$ is 4.7 g/cc. Accordingly, the specific surface area of the NCA4.09, calculated by the above mathematical equation (A), was 0.312 $m^2$/g (= 1.47 $m^2$/cc).

A coating layer composed of LTAF was formed on the surface of the NCA4.09. The coating layer was formed by a compression shear process using a particle composing machine (NOB-MINI, manufactured by Hosokawa Micron Corporation). Specifically, the NCA4.09 and the LTAF were weighed in a volume ratio of 94.0:6.0 and processed under the following conditions: blade clearance of 2 mm, rotational speed of 8,000 rpm, and processing time of 30 min. Thus, the coated active material of Example 11 was obtained.

The content of the element fluorine in the prepared coated active material was measured by combustion ion chromatography. The content of the element fluorine was 2.33 mass%. Based on the specific surface area of the positive electrode active material being 0.312 $m^2$/g, the amount of F was 76 mg/$m^2$.

<Example 12>

[Preparation of Coated Active Material]

NCA4.09 and LTAF were weighed in a volume ratio of 92.3:7.7. Using a particle composing machine as in Example 11, a coating layer composed of the LTAF was formed on the surface of the NCA4.09. Thus, the coated active material of Example 12 was obtained. The content of the element fluorine in the prepared coated active material was measured by combustion ion chromatography. The content of the element fluorine was 2.99 mass%. In the prepared coated active material, the amount of F was 99 mg/$m^2$.

<Example 13>

[Preparation of Coated Active Material]

NCA4.09 and LTAF were weighed in a volume ratio of 90.8:9.2. Using a particle composing machine as in Example 11, a coating layer composed of the LTAF was formed on the surface of the NCA4.09. Thus, the coated active material of Example 13 was obtained. The content of the element fluorine in the prepared coated active material was measured by combustion ion chromatography. The content of the element fluorine was 3.58 mass%. In the prepared coated active material, the amount of F was 119 mg/$m^2$.

<Example 14>

[Preparation of Coated Active Material]

As the positive electrode active material, a powder of Li(NiCoMn)$O_2$ (NCM) was prepared. The NCM was added to ethanol and dispersed using an ultrasonic homogenizer to prepare a measurement sample. The area-average diameter of the NCM was measured from the image-based particle size distribution determined using the same type of apparatus as in Example 1. The area-average diameter of the NCM was 6.46 $\mu$m. This positive electrode active material is hereinafter referred to as NCM6.46. The true density of Li(NiCoMn)$O_2$ is 4.7 g/cc. Accordingly, the specific surface area of the NCM6.46, calculated by the above mathematical equation (A), was 0.198 $m^2$/g (= 0.93 $m^2$/cc).

A coating layer composed of LTAF was formed on the surface of the NCM6.46. The coating layer was formed by a compression shear process using a particle composing machine (NOB-MINI, manufactured by Hosokawa Micron Corporation). Specifically, the NCM6.46 and the LTAF were weighed in a volume ratio of 95.4:4.6 and processed under the following conditions: blade clearance of 2 mm, rotational speed of 8,000 rpm, and processing time of 30 min. Thus, the coated active material of Example 14 was obtained.

The content of the element fluorine in the prepared coated active material was measured by combustion ion chromatography. The content of the element fluorine was 1.79 mass%. Based on the specific surface area of the positive electrode active material being 0.198 $m^2$/g, the amount of F was 92 mg/$m^2$.

<Example 15>

[Preparation of Coated Active Material]

NCM6.46 and LTAF were weighed in a volume ratio of 94.2:5.8. Using a particle composing machine as in Example 14, a coating layer composed of the LTAF was formed on the surface of the NCM6.46. Thus, the coated active material of Example 15 was obtained. The content of the element fluorine in the prepared coated active material was measured by combustion ion chromatography. The content of the element fluorine was 2.25 mass%. In the prepared coated active material, the amount of F was 117 mg/m$^2$.

<Example 16>

[Preparation of Coated Active Material]

NCM6.46 and LTAF were weighed in a volume ratio of 93.1:6.9. Using a particle composing machine as in Example 14, a coating layer composed of the LTAF was formed on the surface of the NCM6.46. Thus, the coated active material of Example 16 was obtained. The content of the element fluorine in the prepared coated active material was measured by combustion ion chromatography. The content of the element fluorine was 2.68 mass%. In the prepared coated active material, the amount of F was 139 mg/m$^2$.

<Example 17>

[Preparation of Coated Active Material]

NCM6.46 and LTAF were weighed in a volume ratio of 90.8:9.2. Using a particle composing machine as in Example 14, a coating layer composed of the LTAF was formed on the surface of the NCM6.46. Thus, the coated active material of Example 17 was obtained. The content of the element fluorine in the prepared coated active material was measured by combustion ion chromatography. The content of the element fluorine was 3.58 mass%. In the prepared coated active material, the amount of F was 188 mg/m$^2$.

<Example 18>

[Preparation of Coated Active Material]

NCM6.46 and LTAF were weighed in a volume ratio of 88.5:11.5. Using a particle composing machine as in Example 14, a coating layer composed of the LTAF was formed on the surface of the NCM6.46. Thus, the coated active material of Example 18 was obtained. The content of the element fluorine in the prepared coated active material was measured by combustion ion chromatography. The content of the element fluorine was 4.47 mass%. In the prepared coated active material, the amount of F was 237 mg/m$^2$.

<<Comparative Example>>

The same procedures as in Example 1 are omitted as appropriate.

As the positive electrode active material, a powder of NCA5.37 was prepared. Subsequently, no coating process was performed, and battery fabrication and evaluation were performed following the same procedure.

The evaluation results of Examples 1 to 18 and Comparative Example described above are shown in Tables 1 and 2.

[Table 1]

| | Active material | LAF (vol%) | Content of element fluorine (mass%) | Amount of F (content of element fluorine/ active material surface area) (mg/m$^2$) | DCR ($\Omega \cdot cm^2$) |
|---|---|---|---|---|---|
| Example 1 | NCA5.37 | 1.1 | 0.45 | 19 | 15.5 |
| Example 2 | NCA5.37 | 3.1 | 1.26 | 54 | 5.7 |
| Example 3 | NCA5.37 | 3.6 | 1.46 | 63 | 5.8 |

(continued)

|  | Active material | LAF (vol%) | Content of element fluorine (mass%) | Amount of F (content of element fluorine/ active material surface area) (mg/m$^2$) | DCR (Ω•cm$^2$) |
|---|---|---|---|---|---|
| Example 4 | NCA5.37 | 4.1 | 1.67 | 71 | 5.5 |
| Example 5 | NCA5.37 | 4.6 | 1.87 | 80 | 5.6 |
| Example 6 | NCA5.37 | 5.6 | 2.28 | 98 | 5.8 |
| Example 7 | NCA5.37 | 8.1 | 3.29 | 143 | 6.9 |
| Example 8 | NCA5.37 | 15.1 | 6.14 | 275 | 19.1 |
| Comparative Example | NCA5.37 | 0 | 0 | 0 | 78.0 |

[Table 2]

|  | Active material | LTAF (vol%) | Content of element fluorine (mass%) | Amount of F (content of element fluorine/ active material surface area) (mg/m$^2$) | DCR (Ω•cm$^2$) |
|---|---|---|---|---|---|
| Example 9 | NCA6.38 | 4.6 | 1.79 | 91 | 7.1 |
| Example 10 | NCA5.37 | 4.6 | 1.79 | 77 | 5.2 |
| Example 11 | NCA4.09 | 6.0 | 2.33 | 76 | 5.1 |
| Example 12 | NCA4.09 | 7.7 | 2.99 | 99 | 4.9 |
| Example 13 | NCA4.09 | 9.2 | 3.58 | 119 | 5.3 |
| Example 14 | NCM6.46 | 4.6 | 1.79 | 92 | 5.3 |
| Example 15 | NCM6.46 | 5.8 | 2.25 | 117 | 5.0 |
| Example 16 | NCM6.46 | 6.9 | 2.68 | 139 | 5.4 |
| Example 17 | NCM6.46 | 9.2 | 3.58 | 188 | 5.3 |
| Example 18 | NCM6.46 | 11.5 | 4.47 | 237 | 6.1 |

<<Discussion>>

From the results shown in Tables 1 and 2, it can be seen that, for each of the active materials, NCM and NCA, coating with the fluorine compound can reduce the DCR. On the other hand, a comparison among Examples 1 to 8 indicates that the DCR varies depending on the amount of F, indicating the presence of an appropriate value that is neither excessively low nor excessively high, both of which are undesirable. This is because an excessively low value results in a small coated surface area of the active material, whereas an excessively high value results in an excessively thick coating layer and thus causes the fluorine compound contained in the coating layer to inhibit lithium-ion conduction paths and electron conduction paths to the surface of the active material. That is, essentially, it is not the simple amount of the fluorine compound, but the amount of the fluorine compound per surface area of the active material. When the amount of F normalized by the surface area of the active material is 10 mg/m$^2$ or more and 280 mg/m$^2$ or less, a battery having a low DCR can be obtained. As shown in Examples 9 to 18, even when the specific surface area and type of the active material and the type of the fluorine compound used in the coating layer are changed, a battery having a sufficiently low DCR is still obtained within the above range. A comparison of Example 5 and Example 10 indicates that Example 10, in which the coating was performed with LTAF, has a lower DCR. This is because LTAF exhibits even higher lithium-ion conductivity than LAF. To enhance lithium-ion conductivity in a fluorine compound material, it is desirable that the element lithium and at least one element selected from the group consisting of metal elements and metalloid elements be contained together. For example, lithium fluoride exhibits significantly low lithium-ion conductivity.

INDUSTRIAL APPLICABILITY

The technique of the present disclosure is useful, for example, in all-solid-state lithium secondary batteries.

**Claims**

1. A coated active material comprising:

   a positive electrode active material; and
   a coating layer coating at least a portion of a surface of the positive electrode active material, wherein
   the coating layer comprises a compound comprising Li, M, and F,
   in the compound, the M is at least one element selected from the group consisting of metalloid elements and metal elements other than Li, and
   an amount of F in the compound per unit surface area of the positive electrode active material is 10 mg/m$^2$ or more and 280 mg/m$^2$ or less.

2. The coated active material according to claim 1, wherein
   the M comprises at least one selected from the group consisting of Al, Ti, Zr, Si, Y, Ca, Mg, Nb, Ta, Mo, W, Ni, and Zn.

3. The coated active material according to claim 1, wherein
   the amount of F in the compound per unit surface area of the positive electrode active material is 50 mg/m$^2$ or more and 240 mg/m$^2$ or less.

4. The coated active material according to claim 3, wherein
   the amount of F in the compound per unit surface area of the positive electrode active material is 70 mg/m$^2$ or more and 150 mg/m$^2$ or less.

5. The coated active material according to claim 1, wherein
   a molar ratio of F to a total amount of anions constituting the compound is 0.5 or more and 1.0 or less.

6. The coated active material according to claim 1, wherein
   in the compound, a molar ratio of Li to a total amount of cations other than Li is 2.3 or more and 6 or less.

7. The coated active material according to claim 1, wherein
   the compound is represented by the following composition formula (1):

   $$Li_{6-\alpha y}(Me_{1-x}Al_x)_y F_6 \qquad \text{Composition Formula (1)}$$

   in the composition formula (1),

   the Me is at least one element selected from the group consisting of metalloid elements and metal elements other than Li and Al,
   the $\alpha$ is an average valence of $(Me_{1-x}Al_x)$, and
   $0 < x \leq 1$ and $0 < y \leq 1.5$ are satisfied.

8. The coated active material according to claim 7, wherein
   in the composition formula (1), the Me is at least one selected from the group consisting of Ti and Zr.

9. The coated active material according to claim 1, wherein
   the positive electrode active material comprises a lithium nickel-containing oxide comprising Li and Ni, the lithium nickel-containing oxide having a layered rock salt structure.

10. The coated active material according to claim 9, wherein
    in the positive electrode active material, a molar ratio of Ni to a total amount of cations other than Li is 0.6 or more.

11. A positive electrode material comprising the coated active material according to any one of claims 1 to 10.

**12.** A positive electrode comprising the positive electrode material according to claim 11.

**13.** A battery comprising the positive electrode according to claim 12.

**14.** The battery according to claim 13, wherein
the battery is a solid-state battery.

**15.** The battery according to claim 14, comprising a solid electrolyte comprising Li and S.

<u>100</u>

101 —

102 —

# FIG. 1

FIG. 2

# FIG. 3

## INTERNATIONAL SEARCH REPORT

| International application No. |
| --- |
| **PCT/JP2024/017535** |

| A. | CLASSIFICATION OF SUBJECT MATTER |
| --- | --- |

*H01M 4/525*(2010.01)i; *H01M 4/36*(2006.01)i; *H01M 10/052*(2010.01)i; *H01M 10/0562*(2010.01)i
FI:   H01M4/525; H01M4/36 C; H01M10/052; H01M10/0562

According to International Patent Classification (IPC) or to both national classification and IPC

| B. | FIELDS SEARCHED |
| --- | --- |

Minimum documentation searched (classification system followed by classification symbols)

H01M4/525; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023/037776 A1 (PANASONIC INTELLECTUAL PROPERTY MANAGEMENT CO., LTD.) 16 March 2023 (2023-03-16) | 1-9, 11-15 |
| | paragraphs [0005], [0012]-[0015], [0103]-[0111], [0198]-[0203], [0218]-[0220], fig. 1 | |
| Y | | 10 |
| Y | WO 2022/092302 A1 (ASAHI KASEI KABUSHIKI KAISHA) 05 May 2022 (2022-05-05) paragraph [0016] | 10 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 July 2024** | **23 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/017535**

| Patent document cited in search report | | | Publication date (day/month/year) | Patent family member(s) | | | Publication date (day/month/year) |
|---|---|---|---|---|---|---|---|
| WO | 2023/037776 | A1 | 16 March 2023 | CN 117897829 A paragraphs [0009], [0026]-[0029], [0137]-[0145], [0239]-[0250], [0280]-[0283], fig. 1 | | | |
| WO | 2022/092302 | A1 | 05 May 2022 | EP 4239721 A1 paragraph [0016] CN 116457958 A KR 10-2023-0079399 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016018735 A